Europäisches Patentamt

European Patent Office

Office européen des brevets

(11) Numéro de publication : **0 495 704 B1**

(12) **FASCICULE DE BREVET EUROPEEN**

(45) Date de publication du fascicule du brevet :
03.05.95 Bulletin 95/18

(51) Int. Cl.$^6$ : **H04N 13/00**

(21) Numéro de dépôt : **92400088.8**

(22) Date de dépôt : **14.01.92**

(54) **Une méthode de codage multi-voies.**

(30) Priorité : **16.01.91 FR 9100444**

(43) Date de publication de la demande :
**22.07.92 Bulletin 92/30**

(45) Mention de la délivrance du brevet :
**03.05.95 Bulletin 95/18**

(84) Etats contractants désignés :
**DE GB**

(56) Documents cités :
EP-A- 0 267 000
PATENT ABSTRACTS OF JAPAN,vol. 12, no.
449 (E-686)25 novembre 1988; &
JP-A-63177672
PATENT ABSTRACTS OF JAPAN,vol. 15, no.
082 (E-1038)26 février 1991; & JP-A-2298184
PATENT ABSTRACTS OF JAPAN,vol. 14, no.
312 (E-948)5 juillet 1990; & JP-A-2100591
PATENT ABSTRACTS OF JAPAN,vol. 13, no.
371 (E-807)17 août 1989; & JP-A-1125086

(56) Documents cités :
ONDE ELECTRIQUE,vol. 71, no. 1, 16 janvier
1991, Paris,FR; pages 10 - 17; CHOQUET,
BRUNO: "Système de télévision stéréoscopique (tv3d) et transmission compatible sur
canal mac (3d-mac)"

(73) Titulaire : **FRANCE TELECOM exploitant
public**
**6, place d'Alleray**
**F-75015 Paris (FR)**
Titulaire : **TELEDIFFUSION DE FRANCE SA**
**10 rue d'Oradour sur Glane**
**F-75932 Paris Cédex 15 (FR)**

(72) Inventeur : **Chassaing, Françoise**
**24, rue des Bersandières**
**F-35520 La Chapelle des Fougeretz (FR)**
Inventeur : **Choquet, Bruno**
**23, Allée de Finlande**
**F-35200 Rennes (FR)**

(74) Mandataire : **Rodhain, Claude et al**
**Cabinet Claude Rodhain S.A.**
**3, rue Moncey**
**F-75009 Paris (FR)**

EP 0 495 704 B1

# EP 0 495 704 B1

## Description

Le domaine de l'invention est celui des systèmes de télévision, plus particulièrement les systèmes de télévision stéréoscopique. L'invention concerne une méthode de codage multi-voies pour coder des images numérisées, notamment des images numérisées de télévision stéréoscopique.

Un système de télévision stéréoscopique a pour finalité la restitution de la sensation du relief sur un écran, par exemple un écran de télévision, à partir d'une analyse stéréoscopique d'une scène observée. Cette analyse stéréoscopique fournit des images pour la vue droite (séquence droite) et des images pour la vue gauche (séquence gauche) à une fréquence vidéo par exemple de 50Hz, à raison de deux trames par image.

Les systèmes de télévision stéréoscopique doivent s'accommoder de contraintes d'ordres économique et technique. En particulier les systèmes de télévision stéréoscopique doivent s'intégrer dans un environnement existant de systèmes de télévision. Ainsi, un système de télévision stéréoscopique doit rester compatible avec les caractéristiques de la norme de transmission (norme MAc en l'occurence) et le signal transmis (signal compatible) doit pouvoir être visualisé directement sur un écran de télévision conventionnel.

Pour respecter ces contraintes, les séquences d'images droite et gauche d'origine ne peuvent être transmises qu'en partie, la partie non-transmise devant être reconstruite dans le décodeur du téléviseur stéréoscopique pour obtenir une visualisation stéréoscopique. Ainsi, pour obtenir une très bonne compatibilité, on peut choisir de ne transmettre qu'une seule séquence d'images (droite ou gauche) mais on préfère transmettre une séquence d'images résultant d'un multiplexage des séquences d'images (droite et gauche avec un traitement d'amélioration de l'image compatible) pour favoriser la restitution stéréoscopique.

L'algorithme de base de cette reconstruction est un algorithme de compensation de mouvement qui est appliqué sur des images numérisées de télévision découpées en bloc de points. Cet algorithme fonctionne correctement pour des blocs de mouvement faible ou moyen. Mais les blocs de mouvement fort ou irrégulier ne sont pas bien reconstruits. Par conséquent il est nécessaire pour ces blocs de mouvement fort ou irrégulier d'utiliser d'autres voies de traitement telles qu'une voie filtrée.

On connaît déjà des méthodes de codage multi-voies pour coder des images numérisées de télévision haute définition dans lesquelles les images numérisées sont traitées simultanément dans des voies différentes comprenant notamment une voie estimation de mouvement et une voie filtrée. La voie estimation de mouvement fournit un vecteur mouvement par bloc de points. Une image numérisée est reconstruite pour chaque voie de traitement à l'aide de filtres d'interpolation pour la voie filtrée et à l'aide des vecteurs mouvement pour la voie estimation de mouvement. Puis, pour chaque bloc de points, les images reconstruites sont comparées à l'image d'origine et la voie de traitement qui donne le meilleur résultat est choisie pour la transmission du bloc considéré.

Toutefois ce choix "a postériori" (après reconstruction au codeur pour toutes les voies de traitement) d'une voie de traitement particulière n'est pas envisageable pour des images numérisées de télévision stéréoscopique. En effet, pour la visualisation en relief, les images ne sont pas toutes reconstruites là où il y a une image source et par conséquent la comparaison entre une image reconstruite et l'image source n'est pas de nature à donner un résultat utilisable pour choisir "a postériori" la meilleure voie de traitement. Cette situation tient essentiellement au fait que l'acquisition des images source stéréoscopiques est faite à 50Hz tandis que la visualisation est faite à 100Hz.

L'invention a donc pour objet une nouvelle méthode de codage multi-voies pour coder des images numérisées de télévision, notamment des images numérisées de télévision stéréoscopique qui permet de faire un choix "a priori" d'une voie de traitement particulière sur la base d'une décision par bloc de points.

Un autre objectif de l'invention est de proposer une telle méthode qui favorise la voie estimation de mouvement pour conserver une bonne définition de l'image stéréoscopique.

A cet effet, l'invention concerne une méthode de codage multi-voies pour coder des images numérisées, notamment des images numérisées de télévision stéréoscopique, dans laquelle les images numérisées sont traitées simultanément dans des voies différentes comprenant au moins une voie estimation de mouvement pour fournir des données de codage des images numérisées et une voie de traitement particulière étant choisie à partir desdites données de codage, méthode remarquable en ce que, dans la voie estimation de mouvement, on découpe une image numérisée d'entrée en blocs de points d'image pour fournir un vecteur mouvement par bloc et une erreur par point de bloc et en ce que pour chaque bloc, on calcule un ensemble de valeurs relatives à une moyenne EMB des erreurs du bloc, un écart type ECT des erreurs du bloc, un écart moyen ECM des erreurs du bloc, une amplitude Va du vecteur mouvement du bloc pour choisir la voie de traitement particulière affectée audit bloc à partir dudit ensemble de valeurs.

Ainsi la méthode de codage selon l'invention permet de choisir une transmission et une reconstruction par voie compensée ou par voie filtrée, le choix étant fait en se basant uniquement sur les résultats de la voie estimation de mouvement. Comme cela apparaîtra par la suite, le choix de la voie estimation de mouvement

2

est favorisé en cas de mouvements faibles ou moyens ou d'erreurs relativement importantes sur seulement quelques points d'un bloc.

D'autres caractéristiques et avantages de l'invention apparaîtront encore mieux à la lecture de la description qui suit d'un exemple de réalisation de l'invention accompagnée des dessins dans lesquels:

- la figure 1 représente le contenu des séquences d'images de télévision stéréoscopique pour l'acquisition, la transmission et la visualisation;
- la figure 2 est un ordinogramme représentant certaines étapes de la méthode de codage multi-voies selon l'invention.

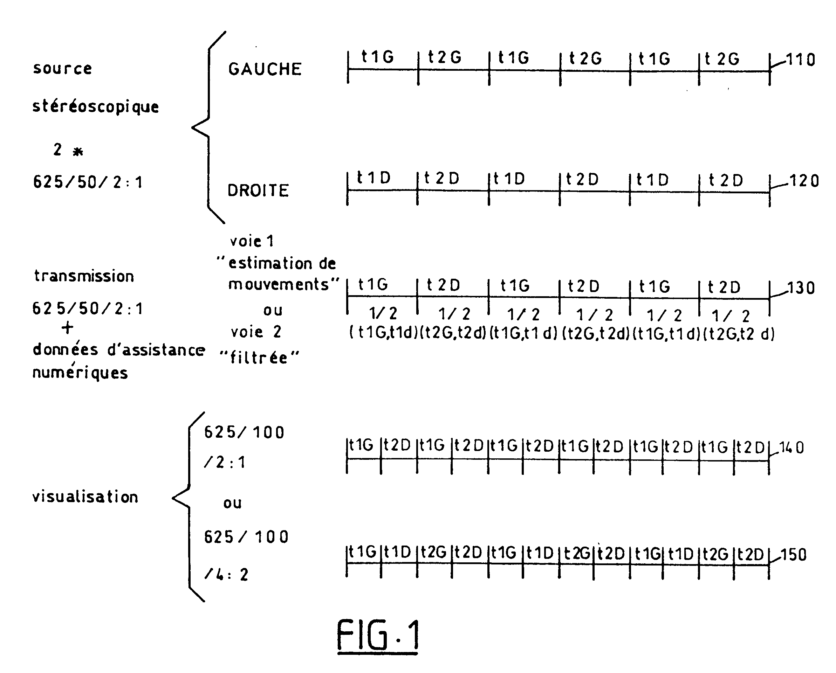

En se reportant à la figure 1, une source stéréoscopique (deux caméras) fournit en simultané une séquence d'images gauche 110 et une séquence d'images droite 120, les deux séquences ayant la même parité (625 lignes, 50 Hz, entrelacement d'ordre 2).

Le signal de transmission 130 correspond par bloc soit à un multiplexage temporel d'une trame de la séquence gauche avec une trame de la séquence droite (dans le cas de la voie estimation de mouvement) soit à un multiplexage spatial point à point de la moitié des points de la séquence gauche avec la moitié des points de la séquence droite (dans le cas de la voie filtrée). Des données d'assistance numériques sont fabriquées lors du passage des images source dans les voies de traitement et sont transmises en parallèle avec les images à travers le canal de transmission. Par conséquent une seule séquence d'images (625 lignes, 50 Hz, entrelacement d'ordre 2) et des données d'assistance numériques sont transmises à partir des deux séquences d'images source.

Lors de la visualisation, des trames gauche et des trames droite d'images sont traitées alternativement à 100 Hz pour reconstituer deux séquences d'images droite et gauche. Pour obtenir la sensation du relief, chaque oeil est rendu sensible à une seule séquence d'images à 50 Hz à l'aide de lunettes polarisantes par exemple. Sur cette figure, on a représenté deux cas de projection, l'un 140 pour lequel une trame impaire de la séquence d'images gauche se répète après chaque image à 100 Hz (625/100/2:1), l'autre 150 pour lequel une trame impaire de la séquence d'images gauche se répète après deux images à 100 Hz (625/100/4:2).

Nous allons maintenant décrire la méthode de codage multi-voies selon l'invention en faisant référence à deux voies de traitement à savoir une voie estimation de mouvement et une voie filtrée mais l'homme du métier pourra facilement étendre la méthode de codage selon l'invention pour des voies de traitement supplémentaires. Par la suite le terme image signifiera image numérisée.

Les images des deux séquences droite et gauche sont traitées dans la voie estimation de mouvement pour fournir les données de codage à transmettre, dont le processus sera rappellé ci-après bien qu'il soit connu de l'homme du métier.

Pour les blocs de points de la séquence d'images gauche (dont seules les trames impaires transmises sont visualisées), la voie estimation de mouvement calcule des vecteurs mouvement se rapportant aux trames paires des images, un vecteur mouvement étant représentatif d'un bloc de points. En reconstruisant ces trames paires non transmises, la voie estimation de mouvement fournit des erreurs pour chaque point de bloc, chaque erreur pouvant par exemple correspondre à une différence de niveaux, pris sur une échelle de niveaux de gris, entre un point reconstruit et un point original d'une image de la séquence gauche. Par contre la reconstruction de la séquence d'images gauche par la voie filtrée est inutile puisqu'elle ne permet pas de déterminer des erreurs de reconstruction.

Pour les blocs de points de la séquence d'images droite (dont aucune trame transmise ne peut être visualisée directement) le traitement de la voie estimation est identique à celui décrit précédemment. Toutefois les vecteurs mouvement sont calculés à l'emplacement des trames impaires des images source et la voie estimation de mouvement fournit une erreur pour chaque point d'un bloc correspondant à une différence de niveaux entre deux points atteints appartenant respectivement à deux trames impaires successives. Là encore, la reconstruction de la séquence d'images droites par la voie filtrée est inutile.

L'estimateur de mouvement utilisé dans la méthode de codage multi-voies selon l'invention est de préférence un estimateur dit "PEL RECURSIVE" décrit dans l'article "New technique in Pel recursive motion compensation" de D.R. WALKER & K.R. RAO publié dans la revue "Proceedings ICC 84, Amsterdam, May 14-17, 1984, pages 703-706". La voie estimation de mouvement après segmentation fournit pour chaque bloc de points des images sources un vecteur mouvement et pour chaque point du bloc une erreur de reconstruction. La taille préférée du bloc de point est de $8*8$ points d'image.

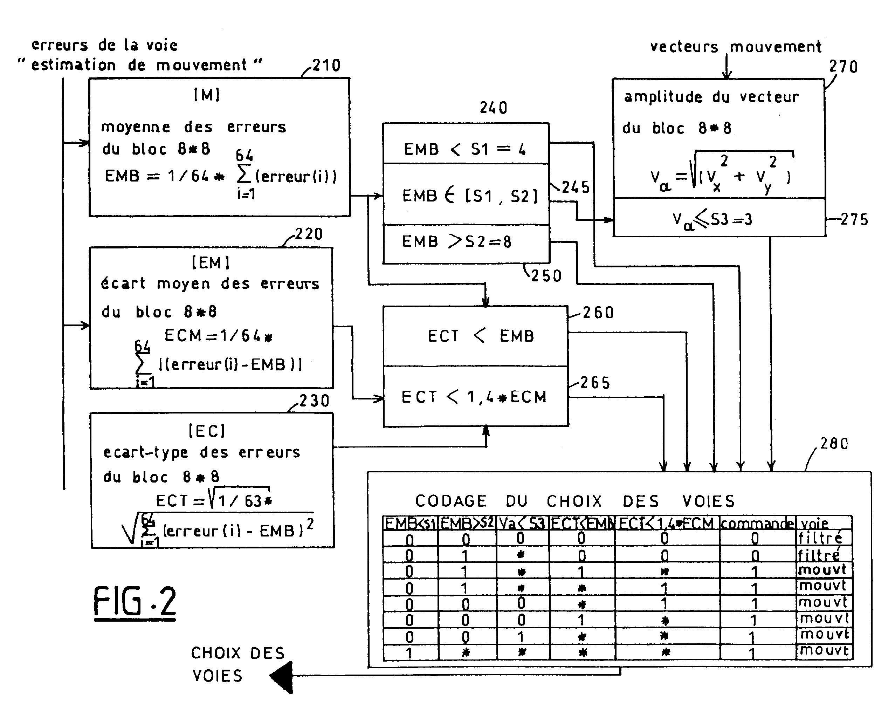

En se reportant maintenant à la figure 2, dans la voie estimation de mouvement, on calcule pour chaque bloc de points d'image un ensemble de valeurs relatives à une moyenne EMB des erreurs du bloc dans 210, un écart type ECT des erreurs du bloc dans 230, un écart moyen ECM des erreurs du bloc dans 220, une amplitude Va du vecteur mouvement du bloc dans 270 à partir des relations suivantes:

3

$$EMB = 1/64 \cdot \sum_{i=1}^{64} erreur(i)$$

$$ECM = 1/64 \cdot \sum_{i=1}^{64} \left| erreur(i) - EMB \right|$$

$$ECT = \sqrt{1/63 \cdot \sum_{i=1}^{64} (erreur(i) - EMB)^2}$$

$$Va = \sqrt{Vx^2 + Vy^2}$$

et on choisit d'affecter dans 280 au bloc considéré une voie de traitement particulière (voie estimation de mouvement ou voie filtrée) à partir de l'observation de cet ensemble de valeurs et notamment à partir de leur comparaison par rapport à des seuils. En ce qui concerne les coordonnées Vx, Vy du vecteur mouvement du bloc, celles-ci sont prises dans le repère dont l'origine est le point courant. Vx est mesuré selon un axe parallèle aux lignes d'images et Vy est mesuré dans la direction perpendiculaire aux lignes d'images. Le déplacement maximum permis pour Vx est un déplacement de plus ou moins seize points sur la même ligne et entre les trames précédente et suivante. Le déplacement maximum permis pour Vy est un déplacement de plus ou moins seize lignes entre les trames précédente et suivante.

Ainsi, on compare la moyenne des erreurs EMB à un premier seuil S1 et à un second seuil S2 plus grand que le premier seuil S1. Si la moyenne des erreurs EMB est inférieure au premier seuil S1 dans 240, la voie de traitement choisie est la voie estimation de mouvement. Si la moyenne des erreurs EMB est comprise entre les seuils S1, S2 dans 245 et que l'amplitude Va du vecteur mouvement est inférieure à un troisième seuil S3 dans 275, la voie de traitement choisie est la voie estimation de mouvement. La voie estimation de mouvement sera encore choisie en tant que voie de traitement si l'écart type ECT des erreurs du bloc est inférieur à la moyenne EMB des ereurs du bloc dans 260 ou si l'écart type ECT des erreurs du bloc est inférieur à l'écart moyen ECM des erreurs du bloc dans 265 de préférence 1,4 fois ECM. Ces deux derniers cas traduisent que seulement quelques points du bloc ont des erreurs importantes. Enfin si aucun des cas précédents n'est vérifié, la voie de traitement choisie est la voie filtrée puisqu'on est alors en présence de mouvements forts ou irréguliers pour le bloc considéré.

Pour améliorer encore la qualité de la restitution stéréoscopique, le choix final de la voie de traitement pour un bloc tient compte du choix effectué pour les blocs qui l'environnent afin d'homogénéiser le choix des voies de traitement pour éviter les transitions brusques et répétées d'une voie de traitement à l'autre.

## Revendications

1. Une méthode de codage multi-voies pour coder des images numérisées, notamment des images numérisées de télévision stéréoscopique, dans laquelle les images numérisées sont traitées dans différentes voies comprenant au moins une voie estimation de mouvement pour fournir des données de codage des images numérisées et une voie de traitement particulière étant choisie à partir desdites données de codage, méthode **caractérisée** en ce que dans la voie estimation de mouvement on découpe une image numérisée d'entrée en blocs de points d'image pour fournir un vecteur mouvement par bloc et une erreur par point de bloc et en ce que pour chaque bloc, on calcule (210, 220, 230, 270) un ensemble de valeurs relatives à une moyenne EMB des erreurs du bloc, un écart type ECT des erreurs du bloc, un écart moyen ECM des erreurs du bloc, une amplitude Va du vecteur mouvement du bloc pour choisir (240, 245, 250, 260, 265, 275) la voie de traitement particulière affectée audit bloc à partir dudit ensemble de valeurs.

2. Une méthode selon la revendication 1, dans laquelle la voie estimation de mouvement est choisie quand:
- la moyenne des erreurs du bloc est inférieure à une première valeur de seuil S1;
- la moyenne des erreurs du bloc est comprise entre la première valeur de seuil S1 et une seconde valeur de seuil S2 plus grande que la première valeur de seuil et que l'amplitude du vecteur mouvement du bloc est inférieure à une troisième valeur de seuil S3;
- l'écart type des erreurs du bloc est supérieur à la moyenne des erreurs du bloc;
- l'écart type des erreurs du bloc est supérieur à l'écart moyen des erreurs du bloc.

**Patentansprüche**

1. Verfahren zur Mehrwegskodierung zum Kodieren digitalisierter Bilder, insbesondere digitalisierter, räumlicher Fernsehbilder, wobei die digitalisierten Bilder auf unterschiedlichen Wegen verarbeitet werden und wenigstens ein Bewegungsschätzungsweg vorhanden ist, um Kodierungsdaten der digitalisierten Bilder zu liefern, sowie ein besonderer Verarbeitungsweg, der ausgehend von den Kodierungsdaten ausgewählt wird, dadurch gekennzeichnet daß bei dem Bewegungsschätzungsweg ein digitalisiertes Eingangsbild in Bildpunktblöcke aufgeteilt wird, um einen Bewegungsvektor je Block und einen Fehler je Punkt des Blocks zu liefern und daß für jeden Block ein Satz von Werten berechnet wird (210, 220, 230, 270), die sich auf einen Mittelwert EMB der Fehler des Blocks, eine Standardabweichung ECT der Fehler des Blocks, eine Durchschnittsabweichung ECM der Fehler des Blocks und eine Amplitude Va des Bewegungsvektors des Blocks beziehen, um ausgehend von dem genannten Satz von Werten den besonderen Verarbeitungsweg auszuwählen (240, 245, 250, 260, 265, 275), der dem Block zugeordnet ist.

2. Verfahren nach Anspruch 1, dadurch gekennzeichnet, daß der Bewegungsschätzungsweg gewählt wird, wenn:
- der Mittelwert der Fehler des Blocks unterhalb eines ersten Schwellenwerts S1 liegt;
- der Mittelwert der Fehler des Blocks zwischen dem ersten Schwellenwert S1 und einem zweiten Schwellenwert S2, der größer als der erste Schwellenwert ist, liegt, und die Amplitude des Bewegungsvektors des Blocks unterhalb eines dritten Schwellenwerts S3 liegt;
- die Standardabweichung der Fehler des Blocks größer ist als der Mittelwert der Fehler des Blocks;
- die Standardabweichung der Fehler des Blocks größer ist als die Durchschnittsabweichung der Fehler des Blocks.

**Claims**

1. Multichannel encoding method for encoding digitized pictures, in particular digitized stereoscopic television pictures, in which the digitized pictures are processed in defferent channels comprising at least a movement estimation channel to provide digitized picture encoding data and a particular processing channel being chosen on the basis of said encoding data, method characterized in that an input digitized picture is divided in the movement estimation channel into blocks of pixels to provide a movement vector for each block and an error for each block pixel and, for each block, a set of values is calculated (210, 220, 230, 270) relative to a block mean error, a block error standard deviation ECT, a block error mean deviation ECM and an amplitude Va of the block movement vector to choose (240, 245, 250, 260, 265, 275) the particular processing channel assigned to said block on the basis of said set of values.

2. Method according to claim 1, wherein said movement estimation channel is chosen when :
- the block mean error is less than a first threshold value S1 ;
- the block mean error is between the first threshold value S1 and a second threshold value S2 greater than the first threshold value and the amplitude of the block movement vector is less than a third threshold value S3 ;
- the block error standard deviation is greater than the block mean error ;
- the block error standard deviation is greater than the block error mean deviation.

EP 0 495 704 B1

source

stéréoscopique

2 *

625/50/2:1

| GAUCHE | t1G | t2G | t1G | t2G | t1G | t2G | 110 |

| DROITE | t1D | t2D | t1D | t2D | t1D | t2D | 120 |

transmission

625/50/2:1
+
données d'assistance
numériques

voie 1
"estimation de mouvements"
ou
voie 2
"filtrée"

| t1G | t2D | t1G | t2D | t1G | t2D | 130 |
| 1/2 | 1/2 | 1/2 | 1/2 | 1/2 | 1/2 |
| (t1G,t1d) | (t2G,t2d) | (t1G,t1d) | (t2G,t2d) | (t1G,t1d) | (t2G,t2d) |

visualisation

625/100
/2:1

ou

625/100
/4:2

| t1G | t2D | t1G | t2D | t1G | t2D | t1G | t2D | t1G | t2D | t1G | t2D | 140 |

| t1G | t1D | t2G | t2D | t1G | t1D | t2G | t2D | t1G | t1D | t2G | t2D | 150 |

# FIG·1

erreurs de la voie
"estimation de mouvement"                    ↗210

**[M]**

moyenne des erreurs
du bloc 8*8

$$EMB = 1/64 * \sum_{i=1}^{64}(erreur(i))$$

**[EM]**                                     ↗220
écart moyen des erreurs

du bloc 8*8

$$ECM = 1/64 * \sum_{i=1}^{64}|(erreur(i)-EMB)|$$

**[EC]**                                     ↗230
ecart-type des erreurs

du bloc 8*8

$$ECT = \sqrt{1/63 * \sqrt{\sum_{i=1}^{64}(erreur(i)-EMB)^2}}$$

240

$EMB < S1 = 4$

$EMB \in [S1, S2]$   ↘245

$EMB > S2 = 8$   ↘250

vecteurs mouvement

amplitude du vecteur                         ↗270
du bloc 8*8

$$V_\alpha = \sqrt{(V_x^2 + V_y^2)}$$

$V_\alpha \leqslant S3 = 3$                  ↗275

$ECT < EMB$   ↘260

$ECT < 1,4*ECM$   ↘265

280

CODAGE  DU  CHOIX  DES  VOIES

| EMB<S1 | EMB>S2 | Va<S3 | ECT<EMB | ECT<1,4*ECM | commande | voie |
|--------|--------|-------|---------|-------------|----------|--------|
| 0 | 0 | 0 | 0 | 0 | 0 | filtré |
| 0 | 1 | * | 0 | 0 | 0 | filtré |
| 0 | 1 | * | 1 | * | 1 | mouvt |
| 0 | 1 | * | * | 1 | 1 | mouvt |
| 0 | 0 | 0 | * | 1 | 1 | mouvt |
| 0 | 0 | 0 | 1 | * | 1 | mouvt |
| 0 | 0 | 1 | * | * | 1 | mouvt |
| 1 | * | * | * | * | 1 | mouvt |

## FIG.2

CHOIX DES VOIES ◄

EP 0 495 704 B1